(19) Europäisches Patentamt
European Patent Office
Office européen des brevets

(11) **EP 2 306 236 B1**

(12) **FASCICULE DE BREVET EUROPEEN**

(45) Date de publication et mention
de la délivrance du brevet:
**04.04.2012  Bulletin 2012/14**

(51) Int Cl.:
***G02C 13/00*** *(2006.01)*

(21) Numéro de dépôt: **10290468.7**

(22) Date de dépôt: **01.09.2010**

(54) **Procédé d'élaboration d'une consigne de détourage d'une lentille ophtalmique en vue de son montage sur une monture de lunettes semi-ceclée**

Verarbeitungsverfahren eines Sollwerts zum Konturfräsen einer Sehlinse zur Montage auf eine halbkreisförmige Brillenfassung

Method for creating a setting for trimming an ophthalmic lens for the purpose of mounting said lens in a semicircular spectacle frame

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **14.09.2009  FR 0904383**

(43) Date de publication de la demande:
**06.04.2011  Bulletin 2011/14**

(73) Titulaire: **Essilor International
(Compagnie Générale d'Optique)
94220 Charenton-le-Pont (FR)**

(72) Inventeurs:
• **Dubois, Frédéric
94220 Charenton Le Pont (FR)**
• **Freson, David
94220 Charenton Le Pont (FR)**

(74) Mandataire: **Chauvin, Vincent et al
Coralis
14 rue Ballu
75009 Paris (FR)**

(56) Documents cités:
**EP-A1- 1 642 678      EP-A1- 2 027 968
EP-A1- 2 028 532**

**Description**

DOMAINE TECHNIQUE AUQUEL SE RAPPORTE L'INVENTION

La présente invention concerne de manière générale la préparation de lentilles ophtalmiques en vue de leur emboîtement dans des entourages de montures de lunettes semi-cerclées (type Nylor).

ARRIÈRE-PLAN TECHNOLOGIQUE

La partie technique du métier de l'opticien consiste à monter une paire de lentilles ophtalmiques correctrices sur une monture de lunettes sélectionnée par un porteur.
Ce montage se décompose en trois opérations principales :

- l'acquisition des contours des entourages de la monture de lunettes sélectionnée,
- le centrage des lentilles qui consiste à reporter les deux contours acquis sur les deux lentilles ophtalmiques, en une position et suivant une orientation telles qu'une fois montées sur la monture de lunettes, les lentilles se trouvent convenablement centrées en regard des pupilles correspondantes du porteur, puis
- l'usinage des lentilles qui consiste à les découper selon ces contours.

Dans le cadre de la présente invention, on s'intéresse plus particulièrement aux montures de lunettes semi-cerclées, comportant deux demi-cercles (ou « arcades »), chacun fermé par un fil généralement en nylon.
Ces montures de lunettes sont généralement livrées à l'opticien avec deux lentilles de présentation.
Pour l'opération d'acquisition, l'opticien utilise un appareil de lecture de contours qui comporte un palpeur en forme de tige, agencé pour que sa face cylindrique puisse coulisser le long de la tranche de chaque lentille de présentation. Cet appareil permet de déterminer les coordonnées planes, c'est-à-dire en deux dimensions, d'un profil longitudinal courant le long de chaque lentille de présentation.
L'opération d'usinage consiste quant à elle à découper la lentille ophtalmique suivant une trajectoire issue desdites coordonnées planes, de manière à ce que cette lentille puisse mécaniquement et esthétiquement s'adapter à la forme de l'entourage de la monture sélectionnée, tout en exerçant au mieux la fonction optique pour laquelle elle a été conçue.
L'opération d'usinage comprend en particulier une étape de rainage permettant de former sur la tranche de la lentille une rainure d'emboîtement. Lors du montage de la lentille dans l'entourage, cette rainure d'emboîtement s'engage sur une nervure qui court le long de la face intérieure de l'arcade correspondante de la monture. La lentille ophtalmique est alors maintenue en appui contre cette arcade à l'aide du fil nylon qui s'engage dans la rainure d'emboîtement.
Les opérations d'acquisition et d'usinage doivent être réalisées avec soin de manière que chaque lentille puisse parfaitement s'emboîter dans son entourage, sans effort et « du premier coup », c'est-à-dire sans nécessiter de reprise d'usinage ou de mise à longueur du fil nylon.
Malgré le soin apporté à ces opérations, on observe que certaines lentilles ophtalmiques demeurent difficilement montables dans leurs entourages. Il est alors nécessaire, pour écarter tout risque de déboîtement de la lentille hors de son entourage, de reprendre l'usinage de la lentille et/ou de modifier la longueur du fil nylon, ce qui s'avère fastidieux à réaliser.
A titre de comparaison, le document EP-A-1642678 divulgue un procédé de l'art antérieur pour l'élaboration d'une consigne de détourage d'une lentille ophtalmique en vue de son montage dans un entourage d'une monture de lunette.

OBJET DE L'INVENTION

Afin de remédier à l'inconvénient précité de l'état de la technique, la présente invention propose un procédé d'élaboration d'une consigne de détourage d'une lentille ophtalmique, permettant d'égaliser la longueur périmétrique de la lentille usinée avec celle de l'entourage correspondant de la monture de lunettes.
Plus particulièrement, on propose selon l'invention un procédé d'élaboration d'une consigne de détourage comportant les étapes consistant à :

a) acquérir les coordonnées planes d'une pluralité de premiers points caractérisant la forme d'un premier profil longitudinal dudit entourage ;
b) déterminer les coordonnées spatiales de seconds points d'un second profil longitudinal, issu d'une projection dudit premier profil longitudinal sur une surface de référence prédéterminée.
c) calculer la longueur périmétrique dudit second profil longitudinal,

d) déterminer les coordonnées spatiales de troisièmes points d'un troisième profil longitudinal, issu d'une projection du premier ou du second profil longitudinal sur une surface courbée déduite d'un paramètre de forme de la lentille ophtalmique,

e) corriger les coordonnées spatiales des troisièmes points, de manière à égaliser la longueur périmétrique du troisième profil longitudinal avec la longueur périmétrique du second profil longitudinal,

f) déduire desdites coordonnées spatiales corrigées ladite consigne d'usinage.

Les entourages et les lentilles de présentation présentent généralement des cambrures différentes de celles des lentilles ophtalmiques à monter dans ces entourages. Par conséquent, lorsqu'une lentille ophtalmique est usinée suivant les coordonnées planes d'un profil longitudinal acquis sur un entourage ou sur une lentille de présentation, la lentille ophtalmique présente au final une longueur périmétrique tridimensionnelle différente de celle de l'entourage. Cette différence de longueurs périmétriques, fonction de la différence entre les cambrures de l'entourage et de la lentille ophtalmique, est à l'origine des difficultés de montage rencontrées.

Selon l'invention, on corrige à l'étape e) le troisième profil longitudinal suivant lequel la lentille sera détourée, de manière à s'assurer que la lentille présente au final une longueur périmétrique égale à celle de l'entourage.

Une difficulté particulière pour réaliser cette correction consiste à déterminer la longueur périmétrique des entourages de la monture de lunettes semi-cerclée. En effet, l'acquisition à l'étape a) des seules coordonnées planes des points du premier profil longitudinal ne permet pas de calculer la longueur périmétrique de cet entourage.

C'est d'ailleurs la raison pour laquelle une telle méthode d'égalisation des longueurs périmétriques n'était jusqu'alors pas applicable aux montures de lunettes semi-cerclées.

On connaît en effet du document WO 2009 065963 une méthode d'égalisation des longueurs périmétriques des montures de lunettes cerclées, comportant une étape d'acquisition de la forme tridimensionnelle d'un profil longitudinal de l'un des entourages de cette monture, une étape de calcul de la longueur périmétrique de ce profil longitudinal, une étape de projection de ce profil longitudinal sur la face avant de la lentille, et une étape de déformation de ce profil longitudinal projeté de manière qu'il présente une longueur périmétrique identique à celle initialement calculée.

Le problème technique de la présente invention, qui consiste à égaliser la longueur périmétrique du profil longitudinal suivant lequel la lentille sera détourée avec celle du profil longitudinal acquis sur une monture de lunettes semi-cerclée livrée avec des lentilles de présentation, ne se pose toutefois pas dans ce document.

En effet, dans ce document, la méthode est seulement applicable aux montures de lunettes dont on connaît la forme tridimensionnelle des entourages. Elle s'applique par exemple aux montures de lunettes semi-cerclées livrées avec des gabarits qui permettent, grâce à une base de données fournie par le fabricant de montures, de connaître la forme tridimensionnelle des entourages de cette monture. Cette méthode n'est en revanche pas applicable à la majorité des montures de lunettes semi-cerclées, qui sont livrées avec deux lentilles de présentation, ce qui prive l'opticien de toute possibilité d'acquérir facilement la forme tridimensionnelle de ses entourages.

Dans la présente invention, la demanderesse a observé que les lentilles de présentation sont généralement découpées dans des gabarits présentant une cambrure soit standard, soit pouvant être facilement acquise (par une base de données, par une mesure géométrique ou optique, ...).

Selon l'invention, à l'étape b), les coordonnées planes acquises du premier profil longitudinal sont alors projetées sur une surface de référence qui présente une telle cambrure.

Ainsi, cette projection permet de déterminer les coordonnées spatiales (ou tridimensionnelles) du profil longitudinal de la lentille de présentation, ce qui permet de calculer sa longueur périmétrique.

Grâce à cette étape b), la méthode consistant à égaliser les longueurs périmétriques des lentilles ophtalmiques avec celles de leurs entourages devient alors applicable aux montures de lunettes semi-cerclées.

D'autres caractéristiques avantageuses et non limitatives du procédé conforme à l'invention sont les suivantes :

- à l'étape a), les coordonnées planes des premiers points sont acquises par lecture, avec ou sans contact, du contour d'une lentille de présentation associée audit entourage ;
- à l'étape b), la surface de référence prédéterminée est sphérique ;
- le rayon de courbure de la surface de référence sphérique est égal à un rayon de courbure moyen, prédéterminé à partir des rayons de courbure d'une variété représentative de lentilles de présentation ;
- à l'étape a), les coordonnées planes des premiers points sont acquises dans un plan d'acquisition et à l'étape b), la projection est une projection orthogonale suivant un axe orthogonal audit plan d'acquisition ;
- à l'étape b), ladite projection consiste en un calcul des altitudes des seconds points par rapport au plan d'acquisition, en fonction dudit rayon de courbure moyen et des coordonnées planes des premiers points ;
- à l'étape c), la longueur périmétrique du second profil longitudinal est calculée en fonction des coordonnées spatiales des seconds points ;
- à l'étape d), ladite surface courbée est la face avant ou arrière de la lentille ophtalmique ;
- à l'étape d), ladite surface courbée est une surface située entre les faces avant et arrière de la lentille ophtalmique ;

- ladite surface courbée est parallèle à l'une des faces avant et arrière de la lentille ophtalmique ;
- à l'étape a), le premier profil longitudinal est acquis dans un référentiel de l'entourage repéré par un axe horizontal, et, à l'étape d), le troisième profil longitudinal est déterminé dans un référentiel de la lentille ophtalmique repéré par un axe horizontal, préalablement mis en coïncidence avec le référentiel de l'entourage, en alignant leurs axes horizontaux.

DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.
Sur les dessins annexés :

- la figure 1 est une vue schématique en perspective d'une monture de lunettes semi-cerclée équipée de deux lentilles de présentation ;
- la figure 2 est une vue schématique en perspective d'une lentille ophtalmique non détourée ;
- la figure 3 est une vue schématique en perspective d'un appareil de lecture de contours ;
- la figure 4 est une vue d'un profil longitudinal bidimensionnel représentatif de la forme d'une des lentilles de présentation de la monture de lunettes de la figure 1 et de sa projection en trois dimensions sur une face de cette lentille de présentation ;
- la figure 5 est une vue de face de la lentille ophtalmique de la figue 2, sur laquelle est superposé le profil longitudinal bidimensionnel de la figure 4 ;
- la figure 6 est une vue en perspective du profil longitudinal bidimensionnel de la figure 4, de sa projection sur une face de la lentille ophtalmique de la figure 2, et d'une déformée de cette projection en vue du calcul d'une consigne de détourage de cette lentille ophtalmique ;
- la figure 7 est une vue dans le plan du profil longitudinal projeté de la figure 6 et de sa déformée.

Monture de lunettes

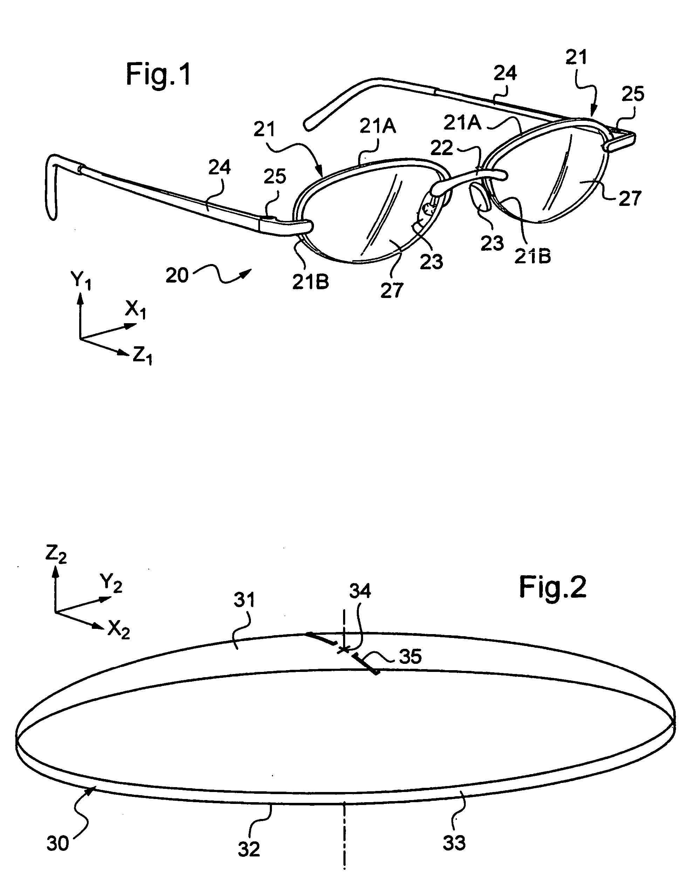

Sur la figure 1, on a représenté une monture de lunettes 20 semi-cerclée, comportant deux entourages 21.
Les entourages 21 de la monture de lunettes 20 comportent chacun une arcade 21A (ou « demi-cercle ») et un fil nylon 21B, dont les deux bouts sont raccordés aux extrémités de cette arcade 21A. Ces arcades 21A et fils nylon 21B permettent conjointement de maintenir deux lentilles sur la monture de lunettes 20.
Les deux arcades 21A sont reliées l'une à l'autre par un pontet 22. Chaque arcade 21A est équipée d'une plaquette nasale 23 apte à reposer sur le nez du porteur et d'une branche 24 apte à reposer sur l'une des oreilles du porteur. Chaque branche 24 est articulée sur l'arcade 21A correspondante au moyen d'un barillet 25.
Les deux arcades 21A de la monture de lunettes 20 présentent un bord intérieur sur lequel court une nervure d'emboîtement.
Tel que cela apparaît sur la figure 1, la monture de lunettes 20 porte deux lentilles de présentation 27 livrées à l'opticien avec la monture.
Les deux entourages 21 présentent une cambrure non nulle. Cette cambrure peut être caractérisée par le rayon de courbure de la face avant sphérique de la lentille de présentation 27.

Lentille ophtalmique

Comme le montre la figure 2, la lentille ophtalmique 30 présente deux faces optiques avant 31 et arrière 32, et une tranche 33.
La face optique avant 31 est ici sphérique et présente un rayon de courbure connu.
La tranche 33 de la lentille présente un contour initial circulaire. La lentille est toutefois destinée à être détourée à la forme de l'entourage 21 correspondant de la monture de lunettes 20, de manière à pouvoir être montée dans celui-ci.
La lentille ophtalmique 30 est plus précisément destinée à être détourée pour présenter sur sa tranche 33 une rainure d'emboîtement qui est apte à être engagée sur la nervure d'emboîtement de l'arcade 21A correspondante de la monture de lunettes et qui est apte à accueillir le fil nylon 21 B.
Cette lentille ophtalmique 30 présente des caractéristiques optiques déterminées en fonction des besoins du porteur de lunettes. Elle présente en particulier des propriétés de réfringence sphérique, cylindrique et prismatique qui sont propres au porteur.
Cette lentille ophtalmique 30 est en outre pourvue de marquages qui permettent un repérage commode du référentiel optique de la lentille ophtalmique 30 pour son montage sur la monture de lunettes 10, 20 sélectionnée par le porteur. Ces marquages consistent ici en des marquages provisoires 34, 35 à l'encre. Ils pourraient en variante consister en des marquages permanents, tels que des micro-gravures.

Ici, ces marquages comportent une croix de centrage 34 permettant de repérer la position du point de centrage de la lentille c'est-à-dire, dans le cas d'une lentille ayant une puissance optique exclusivement sphérique, le point où le rayon incident et le rayon transmis ont même axe.

Il comporte en outre, de part et d'autre de cette croix de centrage 34, deux traits d'horizon 35 repérant l'horizontale de la lentille ophtalmique 30.

On caractérise alors le référentiel optique de la lentille ophtalmique 30 par un repère orthonormé comportant un axe horizontal $X_2$ parallèle auxdits traits d'horizon 35, un axe d'ordonnée $Y_2$, et un axe normal $Z_2$ qui est perpendiculaire au plan tangent à la face avant de la lentille ophtalmique 30 au point de centrage 34.

Terminaux client et fabricant

L'invention présente un avantage particulier lorsque la préparation des lentilles est confiée à des fabricants de lentilles distincts des opticiens, c'est-à-dire lorsque les opticiens agissent en « donneurs d'ordre » qui sous-traitent la fabrication et le détourage des lentilles à de tels fabricants.

Pour illustrer cette configuration, on considérera ici, d'une part, un terminal-client installé du côté d'un opticien pour la commande de lentilles, et, d'autre part, un terminal-fabricant installé du côté d'un fabricant de lentilles pour la fabrication et le détourage de lentilles.

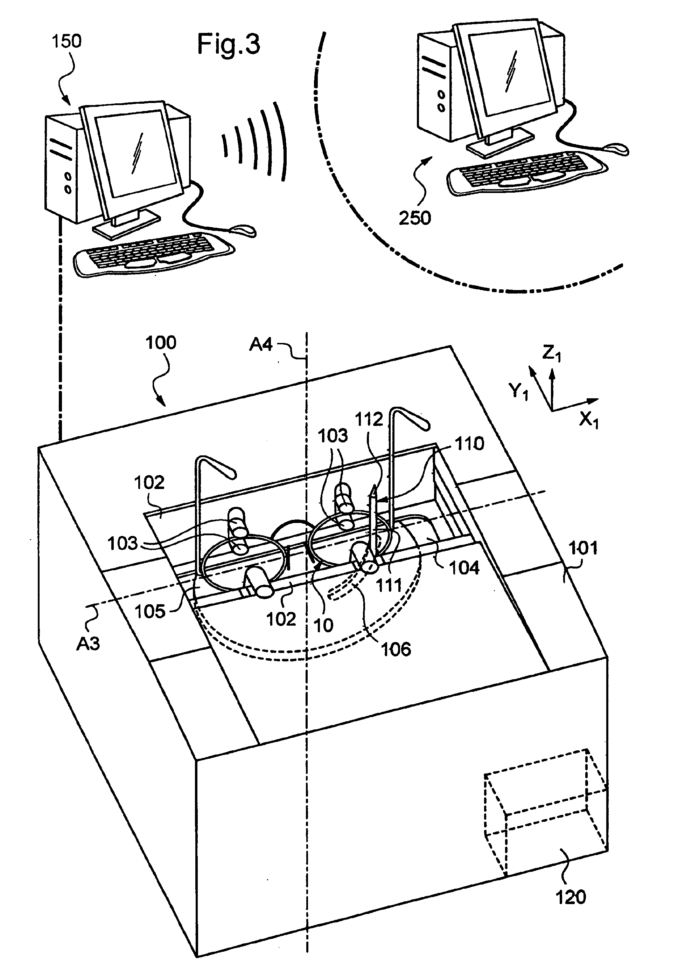

Le terminal-client comporte une unité informatique 150 (figure 3), ici un ordinateur de bureau, pour enregistrer et transmettre des données de commande de lentilles ophtalmiques, par exemple via un protocole de communication par IP (de type Internet). Ces données de commande comportent des données de prescription relatives aux corrections à apporter aux yeux du porteur et des données de forme relatives à la monture de lunettes 10, 20 sélectionnée par le porteur.

Le terminal-fabricant comporte quant à lui une unité informatique 250 pour recevoir, enregistrer et traiter les données de commande transmises par le terminal-client. Il comporte en outre un dispositif de fabrication de lentilles ophtalmiques, comprenant par exemple de moyens de moulage de lentilles conformément aux données de prescription et des moyens de détourage de lentilles conformément aux données de forme.

Appareil de lecture de contours

Dans le terminal-client, l'opticien dispose ici d'un appareil de lecture de contours. Cet appareil de lecture de contours est un moyen bien connu de l'homme du métier et ne fait pas en propre l'objet de l'invention décrite. Il est par exemple possible d'utiliser un appareil de lecture de contours tel que décrit dans le brevet EP 0 750 172 ou commercialisé par Essilor International sous la marque Kappa ou sous la marque Kappa CT.

La figure 3 est une vue générale de cet appareil de lecture de contours 100, tel qu'il se présente à son utilisateur. Cet appareil est aussi bien adapté à relever la forme des entourages des montures de lunettes cerclées 10 que des montures de lunettes semi-cerclées 20. Il comporte à cet effet un capot supérieur 101 recouvrant l'ensemble de l'appareil à l'exception d'une portion supérieure centrale dans laquelle peut être est disposé une monture de lunettes cerclée 10 ou une lentille de présentation 27.

L'appareil de lecture de contours 100 est destiné à relever, dans le cas où la monture de lunettes sélectionnée est cerclée, la forme de l'arête de fond du drageoir de chaque cercle de cette monture de lunettes 10. Il est en revanche destiné à relever, dans le cas où la monture de lunettes sélectionnée est semi-cerclée, la forme du contour de chaque lentille de présentation 27.

L'appareil de lecture de contours 100 comporte à cet effet des premiers moyens de blocage d'une monture de lunettes 10 cerclée, et des seconds moyens de blocage d'une lentille de présentation 27.

Les premiers moyens de blocage comportent un jeu de deux mâchoires 102 mobiles l'une par rapport à l'autre et munies de deux paires de plots 103 mobiles pour former deux pinces adaptées à serrer la monture de lunettes cerclée 10 afin de l'immobiliser.

Les seconds moyens de blocage, non visibles sur les figures, comportent un ergot qui s'étend jusque dans la portion supérieure centrale de l'appareil, et dont l'extrémité supérieure est agencée pour coopérer avec l'une des faces de la lentille de présentation 27, afin de l'immobiliser dans cette portion supérieure centrale.

Dans l'espace laissé visible par l'ouverture du capot 101, un châssis 104 est visible. Une platine (non visible) peut se déplacer en translation sur ce châssis 104 selon un axe de transfert A3. Sur cette platine est monté tournant un plateau tournant 105.

Ce plateau tournant 105 est donc apte à prendre trois positions sur l'axe de transfert A3, dont :

- une première position dans laquelle le centre du plateau tournant 105 est disposé entre les deux paires de plots 103 fixant le cercle droit de la monture de lunettes 10,

- une seconde position dans laquelle le centre du plateau tournant 105 est disposé entre les deux paires de plots 103 fixant le cercle gauche de la monture de lunettes 10, et
- une troisième position intermédiaire dans laquelle le centre du plateau tournant 105 est situé dans l'axe de l'ergot de fixation de la lentille de présentation 27.

Le plateau tournant 105 possède un axe de rotation A4 défini comme l'axe normal à la face avant de ce plateau tournant 105 et passant par son centre. Il est adapté à pivoter autour de cet axe par rapport à la platine. Le plateau tournant 105 comporte par ailleurs une lumière 106 oblongue en forme d'arc de cercle à travers laquelle un palpeur 110 fait saille. Ce palpeur 110 comporte une tige support 111 d'axe perpendiculaire au plan de la face avant du plateau tournant 105 et, à son extrémité libre, un doigt de palpage 112 d'axe perpendiculaire à l'axe de la tige support 111.

Le doigt de palpage 112 est utilisé pour palper les drageoirs des cercles des montures de lunettes cerclées 10.

La tige support 111 est quant à elle est agencée pour glisser le long du contour de la lentille de présentation 27.

L'appareil de lecture de forme 100 comporte des moyens d'actionnement (non représentés) adaptés, d'une première part, à faire glisser la tige support 111 le long de la lumière 106 afin de modifier sa position radiale par rapport à l'axe de rotation A4 du plateau tournant 105, d'une deuxième part, à faire varier la position angulaire du plateau tournant 105 autour de son axe de rotation A4, et, de troisième part, à positionner le doigt de palpage 112 du palpeur 110 à une altitude plus ou moins importante par rapport au plan de la face avant du plateau tournant 105.

En résumé, le palpeur 110 est pourvu de trois degrés de liberté, dont un premier degré de liberté p constitué par l'aptitude du palpeur 110 à se mouvoir radialement par rapport à l'axe de rotation A4 grâce à sa liberté de mouvement le long de l'arc de cercle formé par la lumière 106, un deuxième degré de liberté $\theta$ constitué par l'aptitude du palpeur 110 à pivoter autour de l'axe de rotation A4 grâce à la rotation du plateau tournant 105 par rapport à la platine, et un troisième degré de liberté z constitué par l'aptitude du palpeur 110 à se translater selon un axe parallèle à l'axe de rotation A4 du plateau tournant 105.

Chaque point lu par le palpeur 110 est repéré dans un référentiel, appelé référentiel de porté de la monture.

Ce référentiel est ici caractérisé par un repère orthonormé comportant un axe horizontal $X_1$ parallèle audit axe de transfert A3, un axe d'ordonnée $Y_1$ orthogonal aux axes de transfert A3 et de rotation A4, et un axe normal $Z_1$.

L'appareil de lecture de contours 100 comporte en outre un dispositif électronique et/ou informatique 120 permettant, d'une part, de piloter les moyens d'actionnement de l'appareil de lecture de forme 100, et, d'autre part, d'acquérir et de transmettre à l'unité informatique 150 les coordonnées du palpeur 110.

Procédé d'élaboration de consignes de détourage

Le procédé de préparation d'une lentille ophtalmique 30 en vue de son montage dans un entourage 21 d'une monture de lunettes 20 comporte deux phases principales, dont une première phase d'élaboration d'une consigne de détourage, et une seconde phase de détourage de la lentille ophtalmique suivant cette consigne de détourage.

L'invention porte plus précisément sur la première phase d'élaboration de la consigne de détourage. La seconde phase, bien connue de l'Homme du métier, ne fait pas en propre l'objet de la présente invention et ne sera donc pas ici décrite.

La première phase d'élaboration de la consigne de détourage se décompose en six opérations successives.

Première opération

La première opération consiste à définir les besoins du porteur de lunettes.

Pour cela, le porteur se rend successivement chez un optométriste et chez un opticien.

L'optométriste procède à différents examens relatifs à l'acuité visuelle du porteur, de manière à déterminer des prescriptions qui permettront de mouler deux lentilles ophtalmiques adaptées à chacun des yeux du porteur. Il détermine en particulier, le type unifocal, bifocal ou progressif des lentilles ophtalmiques, et les propriétés de réfringence sphérique, cylindrique et prismatique de ces lentilles.

L'opticien propose quant à lui au porteur de sélectionner une monture de lunettes 20 qui lui convient. Il procède ensuite aux mesures nécessaires au centrage des lentilles ophtalmiques sur la monture sélectionnée, de manière qu'une fois assemblées à la monture, les lentilles soient correctement centrées en regard des yeux du porteur afin d'exercer au mieux les fonctions optiques pour lesquelles elles sont conçues.

L'opticien détermine en particulier la position des points pupillaires du porteur dans le référentiel de porté de la monture. Ces points pupillaires correspondent aux points disposés en regard des pupilles du porteur sur les lentilles équipant la monture sélectionnée. Les points pupillaires sont plus particulièrement repérés par rapport au contour de chaque entourage 21 de la monture de lunettes 20 sélectionnée, au moyen de deux paramètres appelés écart pupillaire et hauteur pupillaire. L'écart pupillaire correspond à la plus grande distance horizontale entre le point pupillaire et la zone nasale de l'entourage. La hauteur pupillaire correspond à la plus grande distance verticale entre le point pupillaire et la zone basse de l'entourage.

<u>Seconde opération</u>

La seconde opération consiste à relever les formes des contours des entourages 21 de la monture de lunettes 20 sélectionnée, au moyen d'un appareil de lecture de contours 100 tel que celui représenté sur la figure 3.

Dans un premier temps, la lentille de présentation 27 est immobilisée dans les seconds moyens de blocage de l'appareil de lecture de contours 100, au centre de l'ouverture supérieure centrale du capot 101, de manière à ce que sa tranche puisse être palpée sur l'ensemble de son contour par la tige support 111.

En position initiale, lorsque la tige support 111 est disposée contre la tranche de la lentille de présentation 27, le dispositif électronique et/ou informatique 120 définit comme nulle la position angulaire $\theta_1$ du palpeur 110.

Les moyens d'actionnement font ensuite pivoter le plateau tournant 105. Lors de ce pivotement, les moyens d'actionnement imposent un effort radial constant sur le palpeur 110 en direction de l'axe de rotation A4, pour que la tige support 111 du palpeur 110 reste au contact de la tranche de la lentille de présentation 27.

Le dispositif électronique et/ou informatique 120 relève pendant la rotation du plateau tournant 105 les coordonnées planes $\rho_1$, $\theta_1$ d'une pluralité de premiers points $P_1$ de la tranche de la lentille de présentation 27 (par exemple 360 points séparés angulairement de 1 degré). Ces 360 points palpés $P_1$ définissent ici également un profil longitudinal de l'entourage 21 de la monture de lunettes semi-cerclée (ou « premier profil longitudinal »).

Puis, les coordonnées planes $\rho_1$, $\theta_1$ des 360 points palpés $P_1$ sont ensuite transmises par le dispositif électronique et/ou informatique 120 à l'unité informatique 150 du terminal-client.

Bien sûr, en variante, les coordonnées du profil longitudinal de l'entourage pourraient être acquises autrement, par exemple optiquement, à l'aide d'un appareil laser ou d'un appareil de capture et de traitement d'images agencé pour déterminer, à partir d'un cliché de la monture de lunettes sélectionnée, les coordonnées d'une pluralité de points de chacun de ses entourages.

Ces coordonnées pourraient également être acquises à partir de données fournies par le fabricant de montures de lunettes. Elles pourraient aussi être acquises à partir d'une base de données dans laquelle l'opticien renseignerait les formes bidimensionnelles des entourages des montures de lunettes dont il dispose, de manière à ne devoir acquérir ces formes qu'une seule fois.

Ici, à l'issue de cette seconde opération, l'unité informatique 150 du terminal-client transmet l'ensemble des données acquises à l'unité informatique 250 du terminal-fabricant. Ces données comportent en particulier les prescriptions du porteur et les coordonnées des 360 points palpés $P_1$.

Ces données sont alors utilisées pour mouler les deux lentilles ophtalmiques du porteur et pour usiner leurs faces optiques à la forme souhaitée, selon des procédés qui ne font pas l'objet de la présente invention.

Ces données sont ensuite utilisées pour détourer les lentilles ophtalmiques ainsi obtenues, afin de ramener leurs contours à la forme souhaitée, comme cela sera détaillé dans la suite de cet exposé.

<u>Troisième opération</u>

La troisième opération consiste en un calcul de la longueur périmétrique $l_1$ de l'entourage 21 de la monture de lunettes 20 sélectionnée.

Pour élaborer la consigne de détourage, l'unité informatique 250 doit en effet déterminer cet autre paramètre de détourage, de manière que la lentille ophtalmique 30 une fois détourée présente un contour de longueur périmétrique égale à la longueur périmétrique de l'entourage 21.

Puisque la monture de lunettes 20 est semi-cerclée, seules les coordonnées planes $x_1$, $y_1$ de 360 points palpés $P_1$ sont connues, ce qui ne permet pas de directement calculer la longueur périmétrique $l_1$ de l'entourage 21.

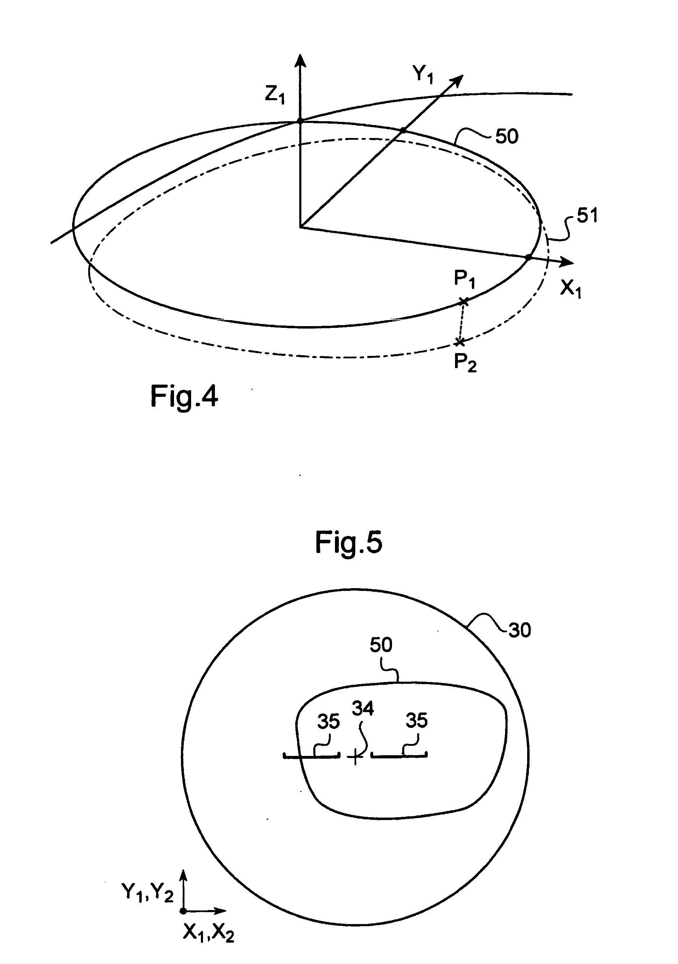

Le profil longitudinal ayant été acquis en deux dimensions dans le plan $(X_1 ; Y_1)$, il s'agit alors, comme le montre plus particulièrement la figure 4, de déformer ce profil longitudinal acquis 50 de manière à lui conférer une courbure (suivant l'axe $Z_1$) qui correspond à la courbure de l'entourage 21.

Pour cela, l'unité informatique détermine les coordonnées spatiales $x_2$, $y_2$, $z_2$ de 360 seconds points $P_2$ d'un second profil longitudinal (appelé profil courbé 51), issus de la projection des 360 points $P_1$ sur une surface de référence prédéterminée.

Cette surface de référence prédéterminée est ici représentative de la forme de la face avant de la lentille de présentation 27. Elle est ici sphérique. Son rayon de courbure Rci est égal à un rayon de courbure moyen, calculé à partir des rayons de courbure d'une variété représentative de lentilles de présentation (les rayons de courbure des lentilles de présentation sont effectivement généralement identiques ou homologues).

La projection est ici une projection orthogonale suivant l'axe normal $Z_1$. Par conséquent, les coordonnées planes $x_2$, $y_2$ des 360 points projetés $P_2$ du profil courbé 51 sont égales aux coordonnées planes $x_1$, $y_1$ des 360 points du profil longitudinal acquis 50.

Autrement formulé, la projection du profil longitudinal acquis 50 consiste, pour l'unité informatique 250, en un simple calcul des altitudes $z_2$ des points $P_2$ du profil courbé 51 en fonction du rayon de courbure $Rc_1$ et des coordonnées planes $x_1$, $y_1$ des points $P_1$, selon la formule suivante :

$$z_2 = Rc_1 - \sqrt{Rc_1^2 - \rho_1^2} \ , \ \text{avec } \rho_1 = (x_1^2 + y_1^2)^{1/2}$$

Les coordonnées spatiales $x_2$, $y_2$, $z_2$ des points $P_2$ du profil courbé 51 étant connues, l'unité informatique 250 calcule alors la longueur périmétrique $l_2$ du profil courbé 51, selon la formule suivante :

$$l_2 = \sum_{i=0}^{359} \sqrt{(x_{2,i+1} - x_{2,i})^2 + (y_{2,i+1} - y_{2,i})^2 + (z_{2,i+1} - z_{2,i})^2}$$

Cette longueur périmétrique $l_2$ du profil courbé 51 est considérée égale à la longueur périmétrique $l_1$ de l'entourage 21.

En variante, la courbure de la surface de référence prédéterminée sur laquelle sont projeté les 360 points $P_1$ peut être déterminée différemment.

Elle peut être directement mesurée sur la face avant de la lentille de présentation 27, en acquérant les coordonnées spatiales de trois points de la face avant de cette lentille de présentation et en en déduisant son rayon de courbure.

Cette courbure peut également être fournie par le fabricant de la monture de lunettes sélectionnée, sous la forme d'un rayon de courbure ou d'un maillage de l'une des faces de la lentille de présentation.

Elle peut aussi être lue dans une base de données dans laquelle l'opticien renseignerait les rayons de courbure des lentilles de présentation des montures de lunettes dont il dispose, de manière à ne devoir acquérir ces rayons de courbure qu'une seule fois.

Quatrième opération

La quatrième opération consiste à centrer, orienter et projeter le profil longitudinal de l'entourage 21 sur la lentille ophtalmique 30 de telle manière qu'une fois assemblée à la monture de lunettes, la lentille détourée suivant ce profil longitudinal projeté se trouve convenablement centrée en regard de la pupille de l'oeil correspondant du porteur.

A l'étape de centrage, comme le montre la figure 5, il s'agit de mettre le référentiel de porté de la monture de lunettes 20 en coïncidence avec le référentiel optique de la lentille ophtalmique 30.

Cette mise en coïncidence est réalisée en alignant les axes horizontaux $X_1$, $X_2$, les axes d'ordonnée $Y_1$, $Y_2$, et les axes normaux $Z_1$, $Z_2$ des repères associés à ces deux référentiels, puis en centrant le point pupillaire (et donc le profil longitudinal) repéré dans le repère $X_1$, $Y_1$, $Z_1$ de la monture sur le point de centrage 34 repéré dans le repère $X_2$, $Y_2$, $Z_2$ de la lentille.

A l'étape d'orientation, il s'agit d'orienter le profil longitudinal de l'entourage 21 autour du point de centrage 34 suivant un angle déterminé par rapport aux traits d'horizon 35 de lentille ophtalmique 30. Cet angle est déterminé par l'optométriste, et est donc compris dans les prescriptions du porteur. Il permet de s'assurer qu'une fois la lentille montée dans l'entourage, la répartition de ses puissances optiques convienne à l'oeil correspondant du porteur.

A l'étape de projection, il s'agit de rectifier la forme du profil longitudinal de l'entourage 21, qui ne présente pas une courbure identique à celle de la lentille ophtalmique 30, afin de lui conférer une telle courbure.

Cette étape est plus précisément réalisée en projetant le profil longitudinal de l'entourage 21 sur la face avant 31 de la lentille ophtalmique 30, de manière à pouvoir déduire le contour suivant lequel la lentille ophtalmique 30 devra être détourée.

Bien sûr, en variante, cette projection pourrait être réalisée sur une autre surface courbée caractéristique de la lentille ophtalmique 30. Elle pourrait par exemple être réalisée sur la face arrière 32 de la lentille ophtalmique 30. Elle pourrait aussi être réalisée sur une surface intermédiaire présentant une courbure identique à celle de l'une des faces avant 31 et arrière 32 de la lentille ophtalmique, c'est-à-dire sur une surface qui est située entre les faces avant 31 et arrière 32 de la lentille ophtalmique 30 et qui est parallèle à la surface de l'une de ces faces avant 31 et arrière 32. Elle pourrait également être réalisée sur une surface moyenne de la lentille ophtalmique, située entre les faces avant 31 et arrière 32 et présentant une courbure déduite des courbures des faces avant 31 et arrière 32.

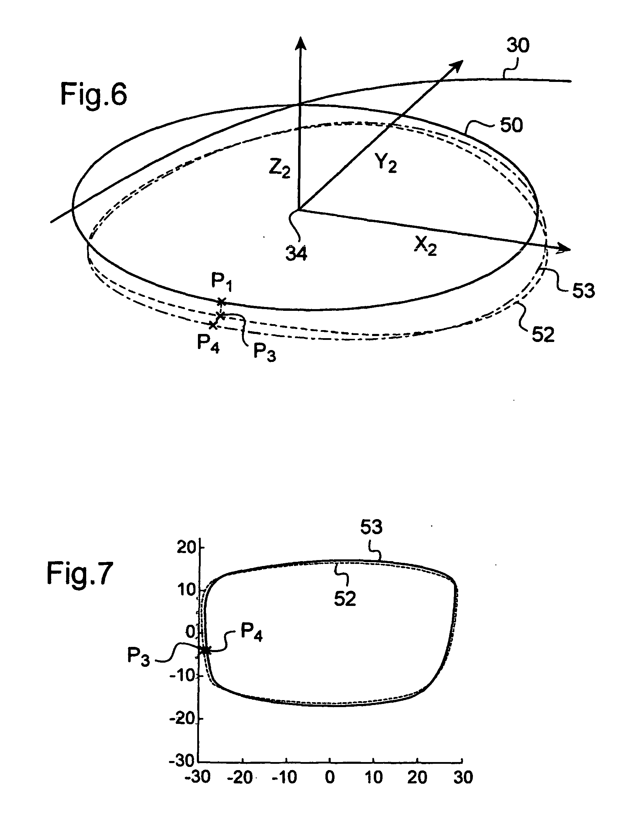

Ici, comme le montre la figure 6, la projection est une projection orthogonale suivant l'axe normal $Z_2$.

Par conséquent, les coordonnées planes $x_3$, $y_3$ des 360 troisièmes points $P_3$ du troisième profil longitudinal (appelé profil longitudinal rectifié 52) sont égales aux coordonnées planes $x_1$, y, des 360 points du profil longitudinal acquis 50.

Autrement formulé, la projection du profil longitudinal acquis 50 consiste, pour l'unité informatique 250, en un simple calcul des altitudes $z_3$ des points $P_3$ du profil longitudinal rectifié 52.

La face avant de la lentille ophtalmique 30 étant ici sphérique et présentant un rayon de courbure $Rc_3$ connu, le calcul des altitudes $z_3$ des points $P_3$ du profil longitudinal rectifié 52 est réalisé selon la formule suivante :

$$z_3 = \sqrt{Rc_3^2 - \rho_1^2} - Rc_3 \quad , \text{ avec } \rho_1 = (x_1^2 + y_1^2)^{1/2}$$

Cinquième opération

Les coordonnées spatiales $x_3$, $y_3$, $z_3$ des points $P_3$ du profil longitudinal rectifié 52 étant connues, l'unité informatique 250 corrige au cours de la cinquième opération la forme du profil longitudinal rectifié 52, de manière que le profil longitudinal corrigé 53 présente une longueur périmétrique $l_4$ égale à la longueur périmétrique $l_1$ du profil longitudinal acquis 50.

Comme le montrent les figures 6 et 7, cette correction est réalisée par un simple calcul itératif permettant d'égaliser sa longueur périmétrique $l_4$ avec la longueur périmétrique $l_1$ du profil longitudinal acquis 50.

Ce calcul consiste en l'espèce à modifier les coordonnées planes $x_3$, $y_3$ des points $P_3$ en appliquant des coefficients de correction Rx, Ry différents suivant l'axe horizontal $X_2$ et l'axe d'ordonnée $Y_2$, de manière à modifier la forme du profil longitudinal rectifié 52 suivant une direction privilégiée.

Ces coefficients Rx, Ry sont choisis de telle manière que leur somme est égale à 1 (Rx + Ry = 1). Les étapes d'itération sont alors les suivantes :

$$x_{3,j+1} = x_{3,j} . \left(1 + Rx \times \frac{l_1 - l_{3,j}}{l_1}\right) \quad ,$$

$$y_{3,j+1} = y_{3,j} . \left(1 + Ry \times \frac{l_1 - l_{3,j}}{l_1}\right) \quad ,$$

avec $l_{3,j}$ la longueur périmétrique du profil longitudinal caractérisé par les points de coordonnées $x_{3,j}$, $y_{3,j}$, $z_3$.

Le choix des coefficients de correction Rx, Ry est réalisé en fonction de la forme des entourages 21 de la monture de lunettes 20. A titre d'exemple, ces coefficients pourront être choisis égaux à 0,5 si la courbure des entourages 21 est sensiblement égale à celle de la lentille ophtalmique 30. En revanche, si la courbure de la lentille ophtalmique 30 est supérieure à celle des entourages 21, le coefficient Rx pourra être choisi égal à 3 et le coefficient Ry égal à -2.

Quoi qu'il en soit, lorsque la longueur périmétrique $l_{3,j}$ devient égale, à 0,1% près, à la longueur périmétrique $l_1$ du profil longitudinal acquis 50, l'unité informatique stoppe cette itération et mémorise les coordonnées spatiales $x_4$, $y_4$, $z_4$ des points $P_4$ du profil longitudinal corrigé 53.

Sixième opération

La sixième opération consiste à déterminer la consigne de détourage de la lentille ophtalmique 30, de manière à la détourer suivant ce profil longitudinal corrigé 53.

Cette septième opération varie en fonction de l'architecture du dispositif de détourage utilisé. Elle ne sera donc pas exposée ici plus en détail.

La présente invention n'est nullement limitée aux modes de réalisation décrits et représentés, mais l'homme du métier saura y apporter toute variante conforme à son esprit.

**Revendications**

1. Procédé d'élaboration d'une consigne de détourage d'une lentille ophtalmique (30) en vue de son montage dans un entourage (21) d'une monture de lunettes semi-cerclée (20), comportant les étapes consistant à :

a) acquérir les coordonnées planes ($\rho_1$, $\theta_1$) d'une pluralité de premiers points ($P_1$) caractérisant la forme d'un premier profil longitudinal (50) dudit entourage (21) ;

b) déterminer les coordonnées spatiales ($\rho_1$, $\theta_1$, $z_2$) de seconds points ($P_2$) d'un second profil longitudinal (51) issu d'une projection dudit premier profil longitudinal (50) sur une surface de référence prédéterminée,

c) calculer la longueur périmétrique ($l_2$) dudit second profil longitudinal (51),

d) déterminer les coordonnées spatiales ($\rho_1$, $\theta_1$, $z_3$) de troisièmes points ($P_3$) d'un troisième profil longitudinal (52) issu d'une projection du premier ou du second profil longitudinal (50, 51) sur une surface courbée déduite d'un paramètre de forme de la lentille ophtalmique (30),

e) corriger les coordonnées spatiales ($\rho_1$, $\theta_1$, $z_3$) des troisièmes points ($P_3$), de manière à égaliser la longueur périmétrique ($l_3$) du troisième profil longitudinal (52) avec la longueur périmétrique ($l_2$) du second profil longitudinal (51),

f) déduire desdites coordonnées spatiales corrigées ($\rho_4$, $\theta_4$, $z_4$) ladite consigne d'usinage.

2. Procédé selon la revendication 1, dans lequel, à l'étape a), les coordonnées planes ($\rho_1$, $\theta_1$) des premiers points ($P_1$) sont acquises par lecture, avec ou sans contact, du contour d'une lentille de présentation (27) associée audit entourage (21).

3. Procédé selon l'une des revendications 1 et 2, dans lequel, à l'étape b), la surface de référence prédéterminée est sphérique.

4. Procédé selon la revendication 3, dans lequel le rayon de courbure ($Rc_1$) de la surface de référence sphérique est égal à un rayon de courbure moyen, prédéterminé à partir des rayons de courbure d'une variété représentative de lentilles de présentation.

5. Procédé selon l'une des revendications 1 à 4, dans lequel à l'étape a), les coordonnées planes ($\rho_1$, $\theta_1$) des premiers points ($P_1$) sont acquises dans un plan d'acquisition ($X_1$ ; $Y_1$) et, à l'étape b), la projection est une projection orthogonale suivant un axe normal ($Z_1$) orthogonal audit plan d'acquisition ($X_1$ ; $Y_1$).

6. Procédé selon les revendications 4 et 5, dans lequel à l'étape b), ladite projection consiste en un calcul des altitudes ($z_2$) des seconds points ($P_2$) par rapport au plan d'acquisition ($X_1$ ; $Y_1$), en fonction dudit rayon de courbure moyen ($Rc_1$) et des coordonnées planes ($\rho_1$, $\theta_1$) des premiers points ($P_1$).

7. Procédé selon l'une des revendications 1 à 6, dans lequel, à l'étape c), la longueur périmétrique ($l_2$) du second profil longitudinal (51) est calculée en fonction des coordonnées spatiales ($\rho_1$, $\theta_1$, $z_2$) des seconds points ($P_2$).

8. Procédé selon l'une des revendications 1 à 7, dans lequel à l'étape d), ladite surface courbée est la face avant (31) ou arrière (32) de la lentille ophtalmique (30).

9. Procédé selon l'une des revendications 1 à 7, dans lequel à l'étape d), ladite surface courbée est une surface située entre les faces avant (31) et arrière (32) de la lentille ophtalmique (30).

10. Procédé selon la revendication 9, dans lequel ladite surface courbée est parallèle à l'une des faces avant (31) et arrière (32) de la lentille ophtalmique (30).

11. Procédé selon l'une des revendications 1 à 10, dans lequel,

- à l'étape a), le premier profil longitudinal (50) est acquis dans un référentiel de l'entourage (21) repéré par un axe horizontal ($X_1$), et
- à l'étape d), le troisième profil longitudinal (52) est déterminé dans un référentiel de la lentille ophtalmique (30) repéré par un axe horizontal ($X_2$), préalablement mis en coïncidence avec le référentiel de l'entourage, en alignant leurs axes horizontaux ($X_1$, $X_2$).

**Claims**

1. A method for generating a trimming setpoint for trimming an ophthalmic lens (30) in order to fit it in a surround (21) of a half-rim spectacle frame (20), comprising the steps consisting in:

a) acquiring the planar coordinates ($\rho_1$, $\theta_1$) of a plurality of first points ($P_1$) characterizing the shape of a first longitudinal profile (50) of said surround (21);

b) determining the spatial coordinates ($\rho_1$, $\theta_1$, $z_2$) of second points ($P_2$) of a second longitudinal profile (51) obtained from a projection of said first longitudinal profile (50) onto a predetermined reference surface,

c) calculating the perimeter length ($l_2$) of said second longitudinal profile (51),

d) determining the spatial coordinates ($\rho_1$, $\theta_1$, $z_3$) of third points ($P_3$) of a third longitudinal profile (52) obtained from a projection of the first or of the second longitudinal profile (50, 51) on a curved surface deduced from a shape parameter of the ophthalmic lens (30),

e) correcting the spatial coordinates ($\rho_1$, $\theta_1$, $z_3$) of the third points ($P_3$), so as to equalize the perimeter length ($l_3$) of the third longitudinal profile (52) with the perimeter length ($l_2$) of the second longitudinal profile (51),

f) deducing said trimming setpoint from said corrected spatial coordinates ($\rho_4$, $\theta_4$, $z_4$).

2. The method as claimed in claim 1, wherein, in the step a), the planar coordinates ($\rho_1$, $\theta_1$) of the first points ($P_1$) are acquired by reading, with or without contact, the contour of a presentation lens (27) associated with said surround (21).

3. The method as claimed in one of claims 1 and 2, wherein, in the step b), the predetermined reference surface is spherical.

4. The method as claimed in claim 3, wherein the radius of curvature ($Rc_1$) of the spherical reference surface is equal to a mean radius of curvature, predetermined from the radii of curvature of a representative range of presentation lenses.

5. The method as claimed in one of claims 1 to 4, wherein, in the step a), the planar coordinates ($\rho_1$, $\theta_1$) of the first points ($P_1$) are acquired in an acquisition plane ($X_1$; $Y_1$) and, in the step b), the projection is an orthogonal projection along a normal axis ($Z_1$) orthogonal to said acquisition plane ($X_1$; $Y_1$).

6. The method as claimed in claims 4 and 5, wherein, in the step b), said projection consists in a calculation of the altitudes ($z_2$) of the second points ($P_2$) relative to the acquisition plane ($X_1$; $Y_1$), according to said mean radius of curvature ($Rc_1$) and according to the planar coordinates ($\rho_1$, $\theta_1$) of the first points ($P_1$).

7. The method as claimed in one of claims 1 to 6, wherein, in the step c), the perimeter length ($l_2$) of the second longitudinal profile (51) is calculated according to the spatial coordinates ($\rho_1$, $\theta_1$, $z_2$) of the second points ($P_2$).

8. The method as claimed in one of claims 1 to 7, wherein, in the step d), said curved surface is the front (31) or rear (32) face of the ophthalmic lens (30).

9. The method as claimed in one of claims 1 to 7, wherein, in the step d), said curved surface is a surface situated between the front (31) and rear (32) faces of the ophthalmic lens (30).

10. The method as claimed in claim 9, wherein said curved surface is parallel to one of the front (31) and rear (32) faces of the ophthalmic lens (30).

11. The method as claimed in one of claims 1 to 10, wherein,

- in the step a), the first longitudinal profile (50) is acquired in a frame of reference of the surround (21) identified by a horizontal axis ($X_1$), and
- in the step d), the third longitudinal profile (52) is determined in a frame of reference of the ophthalmic lens (30) identified by a horizontal axis ($X_2$), previously made to coincide with the frame of reference of the surround, by aligning their horizontal axes ($X_1$, $X_2$).

**Patentansprüche**

1. Verfahren zum Ausarbeiten einer Vorgabe für das Zuschneiden eines Brillenglases (30) in Hinblick auf seine Montage in eine Einfassung (21) eines halb eingefassten Brillengestells (20), das folgende Schritte umfasst:

a) Erfassen der ebenen Koordinaten ($\rho_1$, $\theta_1$) einer Vielzahl von ersten Punkten ($P_1$), die die Form eines ersten Längsprofils (50) der Einfassung (21) charakterisieren;

b) Bestimmen der Raumkoordinaten ($\rho_1$, $\theta_1$, $z_2$) von zweiten Punkten ($P_2$) eines zweiten Längsprofils (51) ausgehend von einer Projektion des ersten Längsprofils (50) auf einer vorbestimmten Referenzfläche,

c) Berechnen der Umfangslänge ($l_2$) des zweiten Längsprofils (51),

d) Bestimmen der Raumkoordinaten ($\rho_1$, $\theta_1$, $z_3$) von dritten Punkten ($P_3$) eines dritten Längsprofils (52) ausgehend von einer Projektion des ersten oder des zweiten Längsprofils (50, 51) auf einer gewölbten Fläche, die von einem Formparameter des Brillenglases (30) abgeleitet wird,

e) Korrigieren der Raumkoordinaten ($\rho_1$, $\theta_1$, $z_3$) der dritten Punkte ($P_3$), sodass die Umfangslänge ($l_3$) des dritten Längsprofils (52) mit der Umfangslänge ($l_2$) des zweiten Längsprofils (51) abgeglichen wird,

f) Ableiten der Bearbeitungsvorgabe von diesen korrigierten Raumkoordinaten ($\rho_4$, $\theta_4$, $z_4$).

2. Verfahren nach Anspruch 1, bei dem die ebenen Koordinaten ($\rho_1$, $\theta_1$) der ersten Punkte ($P_1$) im Schritt a) durch kontaktloses Ablesen oder Ablesen mit Kontakt der Kontur eines der Einfassung (21) zugeordneten Vorlageglases (27) erfasst werden.

3. Verfahren nach einem der Ansprüche 1 und 2, bei dem die vorbestimmte Referenzfläche im Schritt b) sphärisch ist.

4. Verfahren nach Anspruch 3, bei dem der Krümmungsradius ($Rc_1$) der sphärischen Referenzfläche einem durchschnittlichen Krümmungsradius entspricht, der ausgehend von den Krümmungsradien einer repräsentativen Vielzahl von Vorlagegläsern vorbestimmt wird.

5. Verfahren nach einem der Ansprüche 1 bis 4, bei dem die ebenen Koordinaten ($\rho_1$, $\theta_1$) der ersten Punkte ($P_1$) in einer Erfassungsebene ($X_1$; $Y_1$) erfasst werden und die Projektion im Schritt b) eine orthogonale Projektion entlang einer zur Erfassungsebene ($X_1$; $Y_1$) orthogonalen normalen Achse ($Z_1$) ist.

6. Verfahren nach den Ansprüchen 4 und 5, bei dem die Projektion im Schritt b) aus einer Berechnung der Höhen ($z_2$) der zweiten Punkte ($P_2$) in Bezug zur Erfassungsebene ($X_1$; $Y_1$) besteht, wobei die Berechnung vom durchschnittlichen Krümmungsradius ($Rc_1$) und den ebenen Koordinaten ($\rho_1$, $\theta_1$) der ersten Punkte ($P_1$) abhängt.

7. Verfahren nach einem der Ansprüche 1 bis 6, bei dem die Umfangslänge ($l_2$) des zweiten Längsprofils (51) im Schritt c) in Abhängigkeit der Raumkoordinaten ($\rho_1$, $\theta_1$, $z_2$) der zweiten Punkte ($P_2$) berechnet wird.

8. Verfahren nach einem der Ansprüche 1 bis 7, bei dem die gewölbte Fläche im Schritt d) die Vorderseite (31) oder die Rückseite (32) des Brillenglases (30) ist.

9. Verfahren nach einem der Ansprüche 1 bis 7, bei dem die gewölbte Fläche im Schritt d) eine Fläche ist, die sich zwischen der Vorderseite (31) und der Rückseite (32) des Brillenglases (30) befindet.

10. Verfahren nach Anspruch 9, bei dem die gewölbte Fläche zur Vorderseite (31) oder zur Rückseite (32) des Brillenglases (30) parallel ist.

11. Verfahren nach einem der Ansprüche 1 bis 10, bei dem

- im Schritt a) das erste Längsprofil (50) in einem Bezugssystem der Einfassung (21) erfasst wird, das durch eine waagrechte Achse ($X_1$) **gekennzeichnet** ist, und
- im Schritt d) das dritte Längsprofil (52) in einem Bezugssystem des Brillenglases (30) bestimmt wird, das durch eine waagrechte Achse ($X_2$) **gekennzeichnet** ist, die vorab mit dem Bezugssystem der Einfassung in Übereinstimmung gebracht wird, indem ihre waagrechten Achsen ($X_1$, $X_2$) abgeglichen werden.

Fig.1

21

24

25

21A

22

21A

23

21B

21B

27

23

27

25

24

21

23

20

Y₁

X₁

Z₁

$Y_1$

$X_1$

$Z_1$

Z₂

Y₂

X₂

$Z_2$

$Y_2$

$X_2$

31

34

35

Fig.2

30

32

33

# Fig.3

Fig.4

Fig.5

Fig.6

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1642678 A
- WO 2009065963 A
- EP 0750172 A